Europäisches Patentamt

**European Patent Office**

**Office européen des brevets**

(11) Numéro de publication: **0 390 687**

**A1**

(12) # DEMANDE DE BREVET EUROPEEN

(21) Numéro de dépôt: **90400857.0**

(51) Int. Cl.⁵: **C12G 3/02**

(22) Date de dépôt: **29.03.90**

Le (Les) microorganisme(s) a (ont) été déposé(s) auprès CNCM Institute Pasteur sous le(s) numéro(s) I-845.

(30) Priorité: **31.03.89 FR 8904311**

(43) Date de publication de la demande:
**03.10.90 Bulletin 90/40**

(84) Etats contractants désignés:
**AT BE CH DE DK ES FR GB GR IT LI LU NL SE**

(71) Demandeur: **INSTITUT NATIONAL DE LA RECHERCHE AGRONOMIQUE**
**145, rue de l'Université**
**F-75341 Paris Cédex 07(FR)**

(72) Inventeur: **Parfait, Aubert**
**88, Résidence Désirade**
**F-97139 Guadeloupe(FR)**
Inventeur: **Galzy, Pierre**
**1, rue des Mélèzes**
**F-34080 Montpellier(FR)**
Inventeur: **Fahrasmane, Louis**
**Lotissement Cordoval, Montalegre**
**F-97129 Lamentin, Guadeloupe(FR)**

(74) Mandataire: **Ores, Irène et al**
**CABINET ORES 6, Avenue de Messine**
**F-75008 Paris(FR)**

(54) **Boissons fermentées faiblement alcoolisées à base de végétaux et leur procédé de production.**

(57) L'invention est relative à un procédé de production de boissons présentant un faible degré d'alcool, par fermentation de tissus ou d'extraits végétaux en présence de levures, caractérisé en ce que ladite fermentation est réalisée par ensemencement desdits tissus ou extraits végétaux par au moins une espèce de levure à faible pouvoir alcoolique, dont le pouvoir fermentaire s'arrête spontanément dès que le milieu atteint un degré alcoolique compris entre 1° et 4° degrés de Gay-Lussac selon la souche de levure mise en oeuvre.
L'invention est également relative à des boissons fermentées obtenues par ledit procédé.

EP 0 390 687 A1

## BOISSONS FERMENTEES FAIBLEMENT ALCOOLISEES A BASE DE VEGETAUX ET LEUR PROCEDE DE PRODUCTION

La présente invention est relative à des boissons fermentées faiblement alcoolisées à base de végétaux et à leur procédé de production.

La préparation de boissons contenant de l'alcool est un procédé connu depuis le début de la civilisation, une fermentation spontanée s'opérant grâce aux levures présentes sur la surface de divers fruits.

A la suite des travaux de PASTEUR au 19ème siècle, les microorganismes responsables de la fermentation alcoolique ont été étudiés.

Divers microorganismes ont pu ainsi être mis en évidence, notamment :
- des levures appartenant au genre Saccharomyces telles que *S.cerevisiae* et *S.carlsbergensis* utilisées en brasserie, *S. ellipsoïdus* utilisée en vinification et *S.fragilis* qui intervient dans le processus de champagnisation,
- des moisissures appartenant aux genres *Aspergillus*, *Penicillium* et *Mucor*.

Les levures sont des organismes eucaryotes dont le caractère commun est l'état unicellulaire permanent ou prédominant, et l'absence de véritable mycélium cénocytique.

Elles ne forment pas un groupe systématique homogène et se répartissent dans les trois groupes de champignons supérieurs.

On distingue :
- les levures ascosporogènes, rattachées aux Ascomycètes, dont font partie notamment les *Saccharomyces*,
- les levures ballistosporogènes, rattachées aux Basidiomycètes,
- les levures anascosporogènes, rattachées aux champignons imparfaits, dont font notamment partie les *Kloeckera*.

Les *Kloeckera* apparaissent comme une forme imparfaite des levures du genre *Hanseniaspora*, la distinction entre les deux genres se faisant notamment au niveau de la formation des spores et des pseudomycéliums.

Les *Kloeckera* forment des cellules en forme de citrons et ne se reproduisent que par un bourgeonnement ayant lieu aux deux pôles de la cellule, qui prend ainsi fréquemment un aspect biapiculé.

Les levures de vinification comprennent de nombreux genres qui apparaissent naturellement dans les moûts de raisin et qui participent à la fermentation spontanée de ceux-ci en vin. On a dénombré quinze espèces de levures différentes dans le moût avant, pendant et après la fermentation : le début de la fermentation est dominé par *Kloeckera apiculata*, *Metschnikowia pulcherrima* et *Torulopsis stellata*, puis *Saccharomyces rosei* apparaît entre le début de la fermentation et la principale période de fermentation ; cette dernière est dominée par *S. cerevisiae* et *S. uvarum* et la fin de la fermentation par *S. cerevisiae* et *S. bayanus*. La succession des espèces pendant la fermentation dépend de leur tolérance à l'alcool ; au fur et à mesure que la concentration d'alcool augmente, les levures les moins tolérantes meurent. *Kloeckera* s'arrête de croître et de fermenter lorsque la concentration en éthanol du milieu atteint 4-5 degrés de Gay-Lussac (un degré de Gay-Lussac, également dénommé degré 20/20, correspond au nombre de centimètres cubes d'alcools pour 100 centimètres cubes de liquide, mesurés à 15 °C).

Cependant les *Kloeckera* présentent deux inconvénients majeurs dans les milieux de vinification : elles présentent une activité estérasique qui s'exerce sur l'alcool et l'acide acétique présents dans les boissons en cours de fermentation à des concentrations croissantes, laquelle activité estérasique produit de l'acétate d'éthyle qui donne à la boisson un arôme de vinaigre et détruit, par conséquent les qualités hédoniques de celle-ci. L'autre inconvénient est représenté par le fait que la fermentation est difficilement contrôlable dans la mesure où l'on cherche à obtenir des boissons présentant un faible degré alcoolique, du fait de la présence, dans le milieu, d'autres levures qui poursuivent la fermentation de celui-ci jusqu'à des degrés alcooliques supérieurs à ceux auxquels on cherche à se limiter. En tout état de cause, l'Art antérieur n'est pas en faveur, pour l'obtention de boissons, de l'utilisation de *Kloeckera*, en raison du mauvais goût que confère aux boissons son action estérasique en présence d'éthanol à des concentrations relativement élevées.

Pour permettre l'obtention de boissons à faible degré alcoolique, il a été proposé de retirer les levures lorsque le degré d'alcool désiré est atteint, mais cette solution est peu reproductible et met en oeuvre des moyens physiques coûteux qu'il serait souhaitable de pouvoir remplacer par des moyens biologiques.

Un procédé biologique a été mis au point et est revendiqué dans la Demande de Brevet Français 2 601 687 déposée par l'Université de Dijon.

Ce procédé d'élaboration de boissons à faible degré alcoolique à partir de jus sucré, comprend deux étapes :
- une étape de réduction de la teneur en sucres du jus à l'aide d'une levure non fermentaire qui est préférentiellement *Rhodotorula glutinis*,
- une étape de fermentation, réalisée sous pression de gaz carbonique, à l'aide d'une levure fermentaire qui est préférentiellement *S.cerevisiae*.

La réduction de la teneur en sucres du jus permet de faire baisser le degré alcoolique de la boisson, mais l'étape de réduction de la teneur en sucres doit être étroitement contrôlée, ce qui représente l'inconvénient principal de ce procédé.

La présente invention s'est donc donné pour but de pourvoir à des boissons faiblement alcoolisées obtenues par fermentation de végétaux en présence de souches de levures fermentaires sélectionnées, aptes à produire un faible degré d'alcool, dans des conditions propres à défavoriser le développement de fermentations productrices d'un degré d'alcool élevé.

La présente invention a pour objet un procédé de production de boissons présentant un faible degré d'alcool, par fermentation de tissus ou d'extraits végétaux en présence de levures, caractérisé en ce que ladite fermentation est réalisée par ensemencement desdits tissus ou extraits végétaux par au moins une espèce de levure à faible pouvoir alcoolique, dont le pouvoir fermentaire s'arrête spontanément dès que le milieu atteint un degré alcoolique compris entre 1 et 4 degrés de Gay-Lussac, selon la souche de levure mise en oeuvre.

Selon un mode de mise en oeuvre avantageux du procédé de production de boissons faiblement alcoolisées conforme à la présente invention, la fermentation est réalisée dans des conditions propres à défavoriser le développement dans le milieu, de bactéries et de levures autres que les levures fermentaires de l'espèce ensemencée propres à produire un faible degré alcoolique.

Selon un autre mode de mise en oeuvre avantageux du procédé conforme à l'invention, les levures ensemencées présentent un fort pouvoir estérasique et sont faibles productrices d'éthanol, d'acétate d'éthyle et d'acide acétique.

Du fait que les levures mises en oeuvre sont faibles productrices d'alcool et d'acide acétique, les concentrations en éthanol et en acide acétique du milieu sont faibles en sorte qu'elles ne permettent pas la production d'acétate d'éthyle par l'action estérasique ; au contraire l'utilisation, conforme à la présente invention, d'une levure à fort pouvoir estérasique en milieu pauvre en alcool et en acide acétique, provoque la production de constituants qui confèrent au produit final un bouquet de boisson fermentée très satisfaisant du point de vue organoleptique.

Selon une disposition avantageuse de l'invention, la fermentation est réalisée dans un milieu contenant au moins une substance qui favorise l'action fermentaire de la levure à faible pouvoir alcoolique et inhibe ou réduit le développement d'autres levures fermentaires à fort pouvoir alcoolique.

Conformément à l'invention, la levure fermentaire à faible pouvoir alcoolique est choisie dans le groupe des levures qui n'ont pas d'action fermentaire sur le saccharose et notamment dans le groupe des *Hanseniaspora* et des *Kloeckera*.

Selon un autre mode de réalisation avantageux du procédé conforme à la présente invention, le processus de fermentation est précédé d'un traitement préalable de dépectinisation des tissus ou extraits végétaux.

Selon encore un autre mode de réalisation avantageux du procédé conforme à l'invention, le traitement de dépectinisation est suivi d'un traitement de clarification par tous moyens appropriés.

Selon un autre mode de réalisation avantageux du procédé conforme à l'invention, le processus de fermentation est suivi d'un traitement de clarification approprié, notamment par filtration, centrifugation, microfiltration tangentielle et analogues.

Selon encore un autre mode de réalisation avantageux du procédé conforme à la présente invention, le produit final obtenu, à savoir la boisson fermentée, est stabilisé par tous moyens appropriés, et notamment par filtration stérilisante, pasteurisation et analogues.

Selon une disposition avantageuse du procédé conforme à la présente invention, le processus de fermentation est réalisé en cuves closes et donne lieu à une boisson légèrement pétillante.

Selon une autre disposition avantageuse du procédé conforme à la présente invention, le processus de fermentation est réalisé en cuves ouvertes et le produit fermenté obtenu est gazéifié par traitement par de l'anhydride carbonique, avant de le soumettre au traitement de stabilisation susdit.

Selon encore une autre disposition avantageuse du procédé conforme à la présente invention, les végétaux traités par ledit procédé sont avantageusement choisis dans le groupe des Anacardiacées ou sont constitués par un mélange de végétaux dont l'un des composants est choisi dans le groupe des Anacardiacées.

Les Anacardiacées présentent, en effet, l'avantage d'exercer un effet inhibiteur sur la croissance des bactéries et des levures autres que les levures à faible pouvoir alcoolique mises en oeuvre conformément à la présente invention, éventuellement présentes dans le milieu.

Dans le cadre de la présente Invention, l'utilisation de la *Spondias dulcis Forst*, ou prune de cythère, de la *Spondias monbin*, de la mangue, et de la pomme cajou (*Anacardium occidentale*) est particulièrement avantageuse, car elle permet d'obtenir des boissons possédant d'excellentes propriétés organoleptiques.

Il va cependant de soi que le procédé conforme à la présente invention s'applique à de nombreux autres végétaux, tels que légumes, fruits des pays tropicaux aussi bien que tempérés, écorces d'arbres, etc...

En particulier le procédé conforme à l'Invention est avantageusement mis en oeuvre pour traiter des fruits tels que l'ananas ou la banane.

La présente invention a en outre pour objet une souche de levure *Kloeckera apiculata* apte à être mise en oeuvre dans le procédé conforme à la présente invention.

Conformément à l'invention, la souche de levure *Kloeckera apiculata* mise en oeuvre est une souche sélectionnée dite *Kloeckera apiculata* Ka5 déposée le 20 Mars 1989 sous le N° I-845 auprès de la Collection Nationale de Cultures de Microorganismes tenue par l'Institut Pasteur.

La présente invention a de plus pour objet une boisson fermentée faiblement alcoolisée, caractérisée en ce qu'elle présente un faible degré alcoolique, compris entre 1 et 4 degrés de Gay-Lussac, en ce qu'elle présente l'arôme caractéristique des végétaux à partir desquels elle est préparée par fermentation de ceux-ci par action d'une levure fermentaire à faible pouvoir alcoolique et à fort pouvoir estérasique, dont le pouvoir fermentaire s'arrête spontanément dès que le milieu atteint un degré alcoolique compris entre 1° et 4° degrés de Gay-Lussac selon la souche de levure mise en oeuvre.

Selon un mode de réalisation de l'invention, ladite boisson fermentée est obtenue par fermentation d'Anacardiacées avec une levure de l'espèce *Kloeckera apiculata*, elle présente l'arôme caractéristique du fruit mûr de l'Anacardiacée de départ, un faible degré alcoolique, compris entre 1° et 4° degrés de Gay-Lussac, un pH de l'ordre de 3 environ, une acidité totale de l'ordre de 20 mg/litre environ et une teneur en acétate d'éthyle inférieure à 50 mg/litre.

Outre les dispositions qui précèdent, l'invention comprend encore d'autres dispositions, qui ressortiront de la description qui va suivre.

L'invention sera mieux comprise à l'aide du complément de description qui va suivre, qui se réfère à des exemples de mise en oeuvre du procédé objet de la présente invention.

Il doit être bien entendu, toutefois, que ces exemples sont donnés uniquement à titre d'illustration de l'objet de l'invention, dont ils ne constituent en aucune manière une limitation.


EXEMPLES


EXEMPLE 1 : PREPARATION D'UNE BOISSON PETILLANTE A 4 DEGRES DE GAY-LUSSAC

De la pulpe de fruit obtenue par broyage de prunes de cythère est mélangée à de l'eau (100 kg de pulpe pour environ 300 l d'eau). Ce mélange est traité avec une préparation commerciale de pectinase, puis épépiné et clarifié par filtration. On obtient un résidu solide d'environ 27 kg de poids humide. Le liquide obtenu (260 l environ) contient un mélange de glucose et fructose (45 g/litre).

Pour 100 l de ce jus prétraité, clarifié et dilué, on ajoute 13 kg de sucre de canne.

Le mélange est ensemencé avec une souche de *Kloeckera* apte à donner une fermentation alcoolique jusqu'à 4° d'éthanol seulement.

La fermentation est conduite selon la technique de la cuve close. Le produit fermenté contenant 4 degrés d'éthanol et 90 g/l de sucres est filtré et mis en bouteilles stérilement par tirage isobare sous contrepression de gaz carbonique. Le produit obtenu est ainsi légèrement pétillant.


EXEMPLE 2 : PREPARATION DE "PETILLANT" A 1 DEGRE DE GAY-LUSSAC

Des prunes de cythère ont été broyées et la pulpe du fruit ainsi obtenue est mélangée à de l'eau (100 kg de pulpe pour environ 300 l d'eau). Ce mélange est traité avec une préparation commerciale de pectinase, puis épépiné et clarifié par filtration. On obtient un résidu solide d'environ 27 kg de poids humide. Le liquide obtenu (260 l environ) contient un mélange de glucose et de fructose (45 g/litre).

Au jus prétraité, clarifié et dilué obtenu, sont ajoutés 60 g/l de sucre de canne. Le mélange ainsi obtenu est ensemencé par une souche de *Kloeckera* à pouvoir fermentaire exceptionnellement faible : cette souche donne au maximum 1 degré d'alcool en fin de fermentation. Le processus fermentaire est conduit en cuve ouverte mais avec de bonnes précautions d'asepsie. On observe très peu de bactéries ou de levures autres que *Kloeckera* dans ce milieu de fermentation, de même que dans les milieux des autres exemples. Le produit fermenté est ensuite clarifié par microfiltration tangentielle. La conservation est assurée dans des cuves de garde réfrigérées à basse température.

Une faible addition d'anhydride sulfureux assure une protection contre les oxydations. Avant commercialisation, ce produit est gazéifié à l'aide de gaz carbonique et pasteurisé.

Le produit ainsi obtenu présente un bouquet de boisson fermentée, mais a un degré alcoolique inférieur à 1 degré de Gay-Lussac, a une acidité totale d'environ 20 mg/l et un pH d'environ 3.

EXEMPLE 3 : PREPARATION DE "PETILLANT" AYANT UN DEGRE ALCOOLIQUE COMPRIS ENTRE 1° ET 3°, EN CUVE CLOSE

160 kg de pulpe congelée de prune de cythère ont été dilués avec 150 l d'eau à 70° C, puis tamisés finement. 40 litres d'eau à 70° C sont ajoutés au résidu solide et l'on procède à un deuxième tamisage fin, ce qui a permis d'éliminer 43 kg de résidus de pulpes et 20 litres de pectines surnageantes et de recueillir 260 litres de jus.

130 litres de ce jus ont été placés dans une cuve close de 3 hl dans laquelle ont été introduites des pectinases du type Rapidase CX, à raison de 5g/hl, et auxquels on a ajouté 140 litres d'eau à 70° C.

Après une stabulation de 3 heures à 35° C, suivie de l'addition d'environ 35 kg de saccharose dilué dans 43 litres d'eau chaude, on a introduit 4 litres de levain de *Kloeckera apiculata*, contenant 35 g de matière sèche.

A la suite d'une fermentation de 48 heures en cuve close, sous une pression manométrique de 0,5 bar, la biomasse a été filtrée par microfiltration tangentielle entre deux cuves closes sans contact avec l'air, sous une pression de $CO_2$ de 1,5 bar environ. On obtient ainsi 110 litres de produit non conditionné. Une partie de ce produit est conditionnée, puis pasteurisée à 65° C durant 20 minutes.

La boisson obtenue présente les caractéristiques suivantes :

| Degré d'alcool 20/20 | : 1° 50 |
|---|---|
| $CO_2$ bars/cm² 20° C | : 1,6 |
| $CO_2$ g/l | : 2,40 |
| Acétate d'éthyle mg/l | : 17,50 |
| Ethanol mg/l | : 13,30 |
| Propanol mg/l | : 15,75 |
| Butanol mg/l | : 0 |
| Isobutanol mg/l | : 11,30 |
| Isopentanol mg/l | : 37,40 |
| Alcools Supérieurs Totaux mg/l | : 64,45 |

EXEMPLE 4 : PREPARATION DE "PETILLANT" AYANT UN DEGRE ALCOOLIQUE COMPRIS ENTRE 1° ET 3° EN CUVE CLOSE

On ajoute de l'acide hydroxybenzoïque à raison de 100 mg/litre à la partie du produit final obtenu non conditionné, de l'Exemple 3, puis l'on procède au conditionnement.

Les caractéristiques de la boisson obtenue sont les suivantes :

| Degré d'alcool 20/20 | : 1°51 |
|---|---|
| $CO_2$ bars/cm² 20°C | : 1,4 |
| $CO_2$ g/l | : 2,18 |
| Acétate d'éthyle mg/l | : 16,65 |
| Ethanol mg/l | : 10,20 |
| Propanol mg/l | : 13,25 |
| Butanol mg/l | : 0 |
| Isobutanol mg/l | : 10,30 |
| Isopentanol mg/l | : 39,95 |
| Alcools Supérieurs Totaux mg/l | : 63,50 |

## EXEMPLE 5 : PREPARATION DE "PETILLANT" AYANT UN DEGRE ALCOOLIQUE COMPRIS ENTRE 1° ET 3°, EN CUVE OUVERTE

130 litres de jus initial préparé comme décrit dans l'Exemple 3, ont été placés dans une cuve ouverte de 3 hl dans laquelle ont été ajoutés des pectinases du type Rapidase CX, à raison de 5g/hl, puis 140 litres d'eau à 70°C.

Après une stabulation de 3 heures à 35°C, environ 35 kg de saccharose dilué dans 43 litres d'eau chaude, puis 4 litres de levain de *K.apiculata*, contenant 35 g de matière sèche, ont été ajoutés.

Après 5 heures de fermentation on ajoute de la bentonite à raison de 30g/hl, puis la fermentation est poursuivie durant 48 heures encore.

La biomasse obtenue est alors centrifugée puis une partie du surnageant est filtrée sur plaques de type K5, puis gazéifiée par du $CO_2$ à raison de 3 g/l de $CO_2$.

Le produit gazeux est conditionné puis pasteurisé à 65°C pendant 20 minutes.

La boisson obtenue présente les caractéristiques suivantes :

| Degré d'alcool 20/20 | : 2°00 |
|---|---|
| $CO_2$ bars/cm² 20°C | : 1,7 |
| $CO_2$ g/l | : 1,86 |
| Acétate d'éthyle mg/l | : 20,65 |
| Ethanol mg/l | : 10,50 |
| Propanol mg/l | : 13,50 |
| Butanol mg/l | : 0 |
| Isobutanol mg/l | : 11,60 |
| Isopentanol mg/l | : 30,55 |
| Alcools Supérieurs Totaux mg/l | : 55,65 |

## EXEMPLE 6 : PREPARATION DE "PETILLANT" AYANT UN DEGRE ALCOOLIQUE COMPRIS ENTRE 1° ET 3°, EN CUVE OUVERTE

Une partie du surnageant obtenu à l'Exemple 5, est additionnée d'acide hydroxybenzoïque (100 mg/l), gazéifiée par du $CO_2$ (4,7 g/l), puis conditionnée.

La boisson obtenue présente les caractéristiques suivantes :

| Degré d'alcool 20/20 | : 2° 32 |
|---|---|
| $CO_2$ bars/cm² 20°C | : 3,4 |
| $CO_2$ g/l | : 5,52 |
| Acétate d'éthyle mg/l | : 24,60 |
| Ethanol mg/l | : 28,50 |
| Propanol mg/l | : 12,70 |
| Butanol mg/l | : 0 |
| Isobutanol mg/l | : 12,10 |
| Isopentanol mg/l | : 37,55 |
| Alcools Supérieurs Totaux mg/l | : 62,35 |

Il a en outre été constaté que le procédé de microfiltration tangentielle utilisé dans les exemples 3 et 4, donne de meilleurs résultats en ce qui concerne la limpidité et la brillance des produits, que les produits des exemples 5 et 6 filtrés par centrifugation et par filtration sur plaques, respectivement, la technique de microfiltration tangentielle permettant, d'autre part, de conserver l'anhydride carbonique issu de la fermentation en cuve close.

## EXEMPLE 7 : PREPARATION D'UNE BOISSON PETILLANTE A BASE D'ANANAS AYANT UN DEGRE ALCOOLIQUE COMPRIS ENTRE 1° ET 3° EN CUVE CLOSE

100 kg de pulpe congelée d'ananas ont été dilués dans 100 litres d'eau à 70°C, puis tamisés finement. Il a été éliminé 45 kg de résidus de pulpes, 150 litres de jus ont été recueillis.

Les 150 litres de ce jus ont été dilués avec 60 litres d'eau chaude de façon à avoir une température de 70°C du mélange qui est placé dans une cuve close de 3 hl dans laquelle sont ajoutées des pectinases du type Rapidase CX à raison de 5 g/hl.

Après une stabulation de 3 heures à 35°C, suivi de l'addition d'environ 13 kg de saccharose dilué dans 15 litres d'eau chaude, on a introduit 5 litres de levain de *Kloeckera apiculata* contenant 46 g de matière sèche.

A la suite d'une fermentation de 40 heures en cuve close sous une pression manométrique de 0,5 bar, la biomasse a été filtrée par microfiltration tangentielle entre deux cuves closes sans contact avec l'air sous une pression de $CO_2$ de 1,5 bar environ. On obtient ainsi 210 litres de produits non conditionné. Après conditionnement et ajout de $SO_2$ (50 mg/ml) le produit est pasteurisé à 65°C durant 20 minutes.

La boisson obtenue présente les caractéristiques suivantes :

| . Degré alcoolique 2/20 | : 1,8 |
|---|---|
| . $CO_2$ bar/cm² 20°C | : 1,6 |
| . $CO_2$ g/l | : 2,4 |
| . Acidité totale meq. | : 40 |
| . Acidité volatile meq. | : 5,0 |
| . Acétate d'éthyle (mg/l) | : 39,7 |
| . Propanol (mg/l) | : 15,5 |
| . Isobutanol (mg/l) | : 11,3 |
| . Alcools supérieurs totaux (mg/l) | : 26,8 |
| . pH | : 3,5 |

## EXEMPLE 8 : PREPARATION D'UNE BOISSON PETILLANTE A BASE DE MONBIN AYANT UN DEGRE ALCOOLIQUE COMPRIS ENTRE 1° ET 3° EN CUVE CLOSE

100 kg de pulpe congelée de monbin ont été dilués avec 200 l d'eau à 70°C, puis tamisés finement. Il a été éliminé 55 kg en résidus de pulpes et 10 litres d'éléments solides surnageant, ce qui a permis de recueillir 220 l de jus.

100 litres de ce jus ont été dilués avec le même volume d'eau chaude de façon à avoir une température de 70 °C du mélange qui est placé dans une cuve close de 3 hl dans laquelle sont ajoutées des pectinases du type Rapidase CX, à raison de 5 g/hl.

Après une stabulation de 3 heures en cuves à 35 °C, suivi de l'addition d'environ 16 kg de saccharose dilué dans 20 litres d'eau chaude, on a introduit 8 litres de levain de *Kloeckera apiculata* contenant 45 g de matière sèche.

A la suite d'une fermentation de 40 heures en cuve close, sous une pression manométrique de 0,5 bar, la biomasse a été filtrée par microfiltration tangentielle entre deux cuves closes sans contact avec l'air, sous une pression de $CO_2$ de 1,5 bar environ. On obtient ainsi 190 litres de produit non conditionné. Après conditionnement et ajout de $SO_2$ (50 mg/l) le produit est pasteurisé à 65 °C durant 20 minutes.

La boisson obtenue présente les caractéristiques suivantes :

| . Degré alcoolique 20/20 | : 1,7 |
|---|---|
| . $CO_2$ bars/cm$^2$ 20 °C | : 1,6 |
| . $CO_2$ g/l | : 2,40 |
| . Acidité totale meq. | : 32 |
| . Acidité volatile meq. | : 3,5 |
| . Acétate d'ethyle (mg/l) | : 19,8 |
| . Propanol (mg/l) | : 28,0 |
| . Alcools supérieurs totaux (mg/l) | : 28,0 |
| . pH | : 2,8 |

## EXEMPLE 9 : PREPARATION D'UNE BOISSON PETILLANTE A BASE DE MANGUE AYANT UN DEGRE ALCOOLIQUE COMPRIS ENTRE 1 ET 3 EN CUVE CLOSE

100 kg de pulpe congelée de mangue ont été dilués dans 140 litres d'eau à 70 °C, puis tamisés finement. Il a été éliminé 30 kg de résidus de pulpes, ce qui a permis de recueillir 200 litres de jus.

100 litres de ce jus ont été dilués avec le même volume d'eau chaude de façon à avoir une température de 70 °C du mélange qui est placé dans une cuve close de 3 hl dans laquelle sont ajoutées des pectinases du type Rapidase CX à raison de 5 g/hl.

Après une stabulation de 3 heures à 35 °C, suivi de l'addition d'environ 16 kg de saccharose dilué dans 20 litres d'eau chaude, on a introduit 8 litres de levain de *Kloeckera apiculata* contenant 45 g de matière sèche.

A la suite d'une fermentation de 48 heures en cuve close sous une pression manométrique de 0,5 bar, la biomasse a été filtrée par microfiltration tangentielle entre deux cuves closes sans contact avec l'air sous une pression de $CO_2$ de 1,5 bar environ. On obtient ainsi 190 litres de produit non conditionné. Après conditionnement et ajout de $SO_2$ (50 mg/ml) le produit est pasteurisé à 65 °C durant 20 minutes.

La boisson obtenue présente les caractéristiques suivantes :

| . Degré alcoolique 20/20 | : 1,3 |
|---|---|
| . $CO_2$ bar/cm$^2$ 20 °C | : 1,6 |
| . $CO^2$ g/l | : 2,10 |
| . Acidité totale meq. | : 32 |
| . Acidité volatile meq. | : 3,5 |
| . Acétate d'éthyle (mg/l) | : 19,8 |
| . Propanol (mg/l) | : 18,0 |
| . Alcools supérieurs totaux (mg/l | : 18,0 |
| . pH | : 3,8 |

## EXEMPLE 10 : PREPARATION D'UNE BOISSON PETILLANTE A BASE DE CAJOU AYANT UN DEGRE ALCOOLIQUE COMPRIS ENTRE 1° ET 3° EN CUVE CLOSE

100 kg de pulpe congelée de cajou, obtenue par broyage du pédoncule du fruit (qui correspond à la partie pulpeuse), ont été dilués dans 150 litres d'eau à 70 °C, puis tamisés finement. Ainsi sont éliminés 35 kg de résidus solides, et recueillis 205 litres de jus.

100 litres de ce jus auxquels on a ajouté 90 litres d'eau à 70°C, ont été placé dans une cuve close de 3 hl dans laquelle ont été introduites des pectinases du type Rapidase CX à raison de 5 g/hl.

Après une stabulation de 3 H à 35 °C, suivi de l'addition d'environ 15 kg de saccharose dilué dans 18 litres d'eau chaude, on a introduit 4 litres de levain de *Kloeckera apiculata* contenant 40 g de matière sèche.

A la suite d'une fermentation de 48 heures en cuve close sous une pression manométrique de 0,5 bar, la biomasse a été filtrée par microfiltration tangentielle entre deux cuves closes sans contact avec l'air sous une pression de $CO_2$ de 1,5 bar environ. On obtient ainsi 180 litres de produit non conditionné. Une partie de ce produit est conditionné, puis pasteurisé à 65 °C durant 20 minutes.

La boisson obtenue présente les caractéristiques suivantes :

| | |
|---|---|
| . Degré alcoolique 20/20 | : 1,2 |
| . $CO_2$ bar/cm² 20 °C | : 1,5 |
| . $CO_2$ g/l | : 2,7 |
| . Acidité totale meq. | : 28,0 |
| . Acidité volatile meq. | : 6,5 |
| . Acétate d'éthyle (mg/l) | : 14,4 |
| . Propanol (mg/l) | : - |
| . Isobutanol (mg/l) | : - |
| . Isopentanol mg/l | : - |
| . Alcools supérieurs totaux (mg/l | : - |
| . pH | : 3,5 |

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

**Revendications**

1. Procédé de production de boissons présentant un faible degré d'alcool, par fermentation de tissus ou d'extraits végétaux en présence de levures, caractérisé en ce que ladite fermentation est réalisée par ensemencement desdits tissus ou extraits végétaux par au moins une espèce de levure à faible pouvoir alcoolique, dont le pouvoir fermentaire s'arrête spontanément dès que le milieu atteint un degré alcoolique compris entre 1° et 4° degrés de Gay-Lussac selon la souche de levure mise en oeuvre.

2. Procédé selon la Revendication 1, caractérisé en ce que la fermentation est réalisée dans des conditions propres à défavoriser le développement dans le milieu, de bactéries et de levures autres que les levures fermentaires de l'espèce ensemencée propres à produire un faible degré alcoolique.

3. Procédé selon l'une quelconque des Revendication 1 et 2, caractérisé en ce que les levures ensemencées présentent un fort pouvoir estérasique et sont faibles productrices d'éthanol, d'acétate d'éthyle et d'acide acétique.

4. Procédé selon l'une quelconque des Revendications 1 à 3, caractérisé en ce que la fermentation est réalisée dans un milieu contenant au moins une substance qui favorise l'action fermentaire de la levure à faible pouvoir alcoolique et inhibe ou réduit le développement d'autres levures fermentaires à fort pouvoir alcoolique.

5. Procédé selon l'une quelconque des Revendications 1 à 4, caractérisé en ce que la levure fermentaire à faible pouvoir alcoolique est choisie dans le groupe des levures qui n'ont pas d'action fermentaire sur le saccharose et notamment dans le groupe qui comprend *Hanseniaspora* et *Kloeckera*.

6. Procédé selon l'une quelconque des Revendications 1 à 5, caractérisé en ce que le processus de fermentation est précédé d'un traitement préalable de dépectinisation des tissus ou extraits végétaux.

7. Procédé selon l'une quelconque des Revendications 1 à 6, caractérisé en ce que le traitement de dépectinisation est suivi d'un traitement de clarification par tous moyens appropriés.

8. Procédé selon l'une quelconque des Revendications 1 à 7, caractérisé en ce que le processus de fermentation est suivi d'un traitement de clarification approprié, notamment par filtration, centrifugation, microfiltration tangentielle et analogues.

9. Procédé selon l'une quelconque des Revendications 1 à 8, caractérisé en ce que le produit final obtenu, à savoir la boisson fermentée, est stabilisé par tous moyens appropriés, et notamment par filtration stérilisante, pasteurisation et analogues.

10. Procédé selon l'une quelconque des Revendications 1 à 9, caractérisé en ce que le processus de fermentation est réalisé en cuves closes et donne lieu à une boisson légèrement pétillante.

11. Procédé selon l'une quelconque des Revendications 1 à 9, caractérisé en ce que le processus de fermentation est réalisé en cuves ouvertes et le produit fermenté obtenu est gazéifié par traitement par de l'anhydride carbonique, avant de le soumettre au traitement de stabilisation susdit.

12. Procédé selon l'une quelconque des Revendications 1 à 11, caractérisé en ce que les végétaux traités par ledit procédé sont avantageusement choisis dans le groupe des Anacardiacées ou sont constitués par un mélange de végétaux dont l'un des composants est choisi dans le groupe des Anacardiacées.

13. Procédé selon la Revendication 12 caractérisé en ce qu'au moins un des végétaux traités par le dit procédé est choisi dans le groupe constitué par la prune de cythère, le monbin, la pomme cajou et la mangue.

14. Procédé selon l'une quelconque des Revendications 1 à 11 caractérisé en ce que les végétaux traités par ledit procédé sont choisis dans le groupe constitué par l'ananas et la banane.

15. Souche de levure *Kloeckera apiculata* apte à être mise en oeuvre dans le procédé selon l'une quelconque des Revendications 1 à 14.

16. Souche de levure *Kloeckera apiculata* caractérisée en ce qu'elle est constituée par une souche sélectionnée dite souche de *Kloeckera apiculata* Ka5 déposée le 20 Mars 1989 sous le N° I-845 auprès de la Collection Nationale de Cultures de Microorganismes tenue par l'Institut Pasteur.

17. Boisson fermentée faiblement alcoolisée, caractérisée en ce qu'elle présente un faible degré alcoolique, compris entre 1 et 4° degrés de Gay-Lussac, en ce qu'elle présente l'arôme caractéristique des végétaux à partir desquels elle est préparée, par fermentation de ceux-ci par action d'une levure fermentaire à faible pouvoir alcoolique et à fort pouvoir estérasique, dont le pouvoir fermentaire s'arrête spontanément dès que le milieu atteint un degré alcoolique compris entre 1° et 4° degrés de Gay-Lussac selon la souche de levure mise en oeuvre.

18. Boisson fermentée selon la Revendication 17, caractérisée en ce qu'elle est obtenue par fermentation d'au moins une Anacardiacée avec une levure de l'espèce *Kloeckera apiculata*, en ce qu'elle présente l'arôme caractéristique du fruit mûr de l'Anacardiacée de départ, un faible degré alcoolique, compris entre 1° et 4° degrés de Gay-Lussac, un pH de l'ordre de 3 environ, une acidité totale de l'ordre de 20 meq/litre environ et une teneur en acétate d'éthyle inférieure à 50 mg/litre.

19. Boisson fermentée selon la Revendication 18, caractérisée en ce qu'elle est obtenue à partir d'au moins une Anacardiacée choisie dans le groupe constitué par la prune de cythère, le monbin, la mangue et la pomme cajou.

20. Boisson fermentée selon la Revendication 17 caractérisée en ce qu'elle est obtenue à partir d'au moins un végétal choisi dans le groupe qui comprend l'ananas et la banane.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 426 729 (WAHL)<br>* Revendications 1-3; exemple * | 1-5,8-11,17, 20 | C 12 G 3/02 |
| X | EP-A-0 245 841 (HOLSTEN-BRAUEREI AG)<br>* Revendication 1 * | 1-5,8-11,17, 20 | |
| A | CHEMICAL ABSTRACTS, vol. 104, no. 19, mai 1986, page 539, résumé no. 166925w, Columbus, Ohio, US; & JP-A-61 15 679 (ITO JINBEEMON SHOTEN K.K.) 23-01-1986<br>* En entier * | 1,6,7 | |
| A | FOOD CHEMISTRY, vol. 31, no. 3, 1989, pages 177-187, Elsevier Science Publishers Ltd, GB; J. BARCENILLA et al.: "The influence of yeasts on certain non-volatile components of wine"<br>* Page 178, lignes 6-12; page 180 * | 1,5,13, 15,16, 18 | |
| A | FRUITS, vol. 37, no. 11, 1982, pages 727-729, Paris, FR; J. JOAS: "Les mombins: Des possibilités technologiques intéressantes"<br>* En entier * | 12,13, 18,19 | **DOMAINES TECHNIQUES RECHERCHES (Int. Cl.5)**<br><br>C 12 G |

Le présent rapport a été établi pour toutes les revendications

| Lieu de la recherche | Date d'achèvement de la recherche | Examinateur |
|---|---|---|
| LA HAYE | 31-05-1990 | EPAILLARD P.J.H.M. |

EPO FORM 1503 03.82 (P0402)